# EUROPEAN PATENT APPLICATION

(11) **EP 1 707 901 A2**
(43) Date of publication of application: **04.10.2006**
(21) Application number: 06006422.7
(22) Date of filing: 28.03.2006
(51) Int. Cl.: F25B 9/00, F25B 1/10, F25B 5/02, F25D 11/02

(54) **Refrigerated device and refrigerator**

(30) Priority: 30.03.2005 JP 2005100186
(71) Applicant: SANYO ELECTRIC CO., LTD., Moriguchi-shi, Osaka (JP)
(72) Inventor: Nagae, Etsushi, Ota-shi Gunma 373-0813 (JP); Mizukami, Kazuaki, Ora-gun, Gunma 370-0533 (JP); Itsuki, Hiroyuki, Ora-gun, Gunma 370-0533 (JP); Mukaiyama, Hiroshi, Ora-gun, Gunma 370-0725 (JP)
(74) Representative: Glawe, Delfs, Moll

(57) **Abstract**

There are provided a refrigerating device capable of efficiently performing a refrigerant recovering operation even in a case where there are disposed a plurality of heat absorbing units functioning in different temperature zones, and a refrigerator including this refrigerating device. A refrigerating device 30 includes a compressor 1, a radiator 2, an expansion valve 3, a gas-liquid separator 4, a first heat absorbing unit 10 through which a liquid refrigerant from this gas-liquid separator 4 flows, and a second heat absorbing unit 11, and the refrigerating device performs a refrigerant recovering operation of stopping circulation of the refrigerant into the second heat absorbing unit 11, operating the compressor 1, recovering the refrigerant stored in a heat sink 58, and sending the refrigerant to the gas-liquid separator 4 to store the refrigerant in a state in which circulation of the refrigerant into the first heat absorbing unit 10 is stopped after ending a freezing operation.

## Description

### BACKGROUND OF THE INVENTION

The present invention relates to a refrigerating device provided with a plurality of heat absorbing means which function in different temperature zones, and a refrigerator provided with this refrigerating device.

As a refrigerating device provided with a plurality of heat absorbing means which function in different temperature zones, there is known, for example, a refrigerator having: heat absorbing means for refrigerating; and heat absorbing means for freezing which functions at a temperature lower than that of the heat absorbing means for refrigerating. The respective heat absorbing means are operated to perform a freezing operation and a refrigerating operation. However, in such refrigerator, a refrigerant pools in a heat sink of the heat absorbing means for freezing, for example, during the freezing operation. Thereafter, in a case where the refrigerating operation is performed, there is a problem that an amount of the refrigerant in a refrigeration cycle becomes unstable.

In Japanese Patent Application Laid-Open No. 2001-221556, it is disclosed that a refrigerant recovering operation is performed as a method of precisely controlling an amount of a refrigerant to be circulated in the refrigeration cycle and reducing a refrigerant behavior delay in a refrigerator provided with the above-described heat absorbing means for refrigerating and heat absorbing means for freezing. In the operation, a compressor is operated while interrupting inflow of the refrigerant into the heat absorbing means for freezing after the freezing operation ends. Moreover, a fan for a radiator is operated, the refrigerant from the heat absorbing means for freezing is recovered, and the recovered refrigerant is sent to the radiator to condense.

However, the above-described conventional refrigerating device has a problem that during the refrigerant recovering operation, the fan for the radiator needs to be operated in order to allow the refrigerant sent to the radiator to condense, and power consumption and refrigerating device operation noise increase in some case. There is also a problem that the refrigerant cannot condense in the radiator in the refrigerating device having a supercritical pressure in a high-pressure-side circuit.

### SUMMARY OF THE INVENTION

Therefore, an object of the present invention is to provide a refrigerating device capable of efficiently performing a refrigerant recovering operation even in a case where the device includes a plurality of heat absorbing means functioning in different temperature zones, and a refrigerator including this refrigerating device.

In a first aspect of the present invention, there is provided a refrigerating device provided with a refrigeration cycle including: a compressor; a radiator connected to a discharge side of the compressor; first pressure reducing means connected to an outlet side of the radiator; a gas-liquid separator connected to an outlet side of the first pressure reducing means; first heat absorbing means through which a liquid refrigerant from the gas-liquid separator flows and which includes second pressure reducing means and a first heat sink; and second heat absorbing means disposed in parallel with the first heat absorbing means and including third pressure reducing means and a second heat sink, refrigerant pipes of the first and second heat absorbing means on the outlet side being combined and connected to a suction side of the compressor, the second heat absorbing means functioning in a temperature zone lower than that of the first heat absorbing means, a first cooling operation to operate the first heat absorbing means and a second cooling operation to operate the second heat absorbing means being switchable to each other, the refrigerating device comprising: control means for performing a refrigerant recovering operation to stop circulation of the refrigerant into the second heat absorbing means, operate the compressor, recover the refrigerant stored in the second heat sink, and store the refrigerant in the gas-liquid separator in a state in which circulation of the refrigerant into the first heat absorbing means is stopped after the second cooling operation is completed.

In the invention of a second aspect, the refrigerating device of the first aspect further comprises: blowing means for sending air to the second heat sink, and the blowing means is operated during the refrigerant recovering operation.

In the invention of a third aspect, in the refrigerating device of the first or second aspect, the compressor has an intermediate pressure section, and the refrigerating device further comprises: a refrigerant pipe capable of introducing a gas refrigerant separated by the gas-liquid separator into the intermediate pressure section.

In the invention of a fourth aspect, in the refrigerating device of any one of the first to third aspects, a high-pressure side of the refrigeration cycle is operated with a supercritical pressure.

In the invention of a fifth aspect, in the refrigerating device of any one of the first to fourth aspects, the refrigerant recovered from the second heat sink is stored in the gas-liquid separator in a case where the high-pressure side of the refrigeration cycle is operated with the supercritical pressure, and the refrigerant recovered from the second heat sink is stored in the gas-liquid separator and/or the radiator in a case where the high-pressure side of the refrigeration cycle is not operated with the supercritical pressure.

In the invention of a sixth aspect, in the refrigerating device of the fifth aspect, the blowing means for sending air to the radiator is disposed close to the radiator, and the blowing means is operated at a time when the refrigerant recovered from the second heat sink is stored in the radiator.

In a seventh aspect, there is provided a refrigerating device provided with a refrigeration cycle including: a compressor; a radiator connected to a discharge side of the compressor; first pressure reducing means connected to an outlet side of the radiator; a gas-liquid separator connected to an outlet side of the first pressure reducing means; first heat absorbing means through which a liquid refrigerant from the gas-liquid separator flows and which includes second pressure reducing means and a first heat sink; and second heat absorbing means disposed in parallel with the first heat absorbing means and including third pressure reducing means and a second heat sink, refrigerant pipes of the first and second heat absorbing means on the outlet side being combined and connected to a suction side of the compressor, wherein the second heat absorbing means functions in a temperature zone lower than that of the first heat absorbing means, a first cooling operation to operate the first heat absorbing means and a second cooling operation to operate the second heat absorbing means are switchable to each other, the refrigerating device permitting circulation of the refrigerant into the first heat absorbing means, stopping circulation of the refrigerant into the second heat absorbing means, and operating the compressor at a frequency higher than that of the first or second cooling operation before starting the first cooling operation.

In an eighth aspect, there is provided a refrigerating device provided with a refrigeration cycle including: a compressor; a radiator connected to a discharge side of the compressor; first pressure reducing means connected to an outlet side of the radiator; a gas-liquid separator connected to an outlet side of the first pressure reducing means; first heat absorbing means through which a liquid refrigerant from the gas-liquid separator flows and which includes second pressure reducing means and a first heat sink; and second heat absorbing means disposed in parallel with the first heat absorbing means and including third pressure reducing means and a second heat sink, refrigerant pipes of the first and second heat absorbing means on the outlet side being combined and connected to a suction side of the compressor, wherein the second heat absorbing means functions in a temperature zone lower than that of the first heat absorbing means, a first cooling operation to operate the first heat absorbing means and a second cooling operation to operate the second heat absorbing means are switchable to each other, the refrigerating device operating a refrigerant recovering operation of permitting circulation of the refrigerant into the first heat absorbing means, stopping circulation of the refrigerant into the second heat absorbing means, operating the compressor at a frequency higher than that of the first or second cooling operation, recovering the refrigerant stored in the second heat sink, and sending the refrigerant to the gas-liquid separator to store the refrigerant before starting the first cooling operation.

In the invention of a ninth aspect, the refrigerating device of the seventh or eighth aspect further comprises: blowing means for sending air to the second heat sink, and the blowing means is operated in a case where the compressor is operated at the high frequency.

In the invention of a tenth aspect, in the refrigerating device of any one of the first to ninth aspects, carbon dioxide is used as the refrigerant.

In an eleventh aspect of the present invention, a refrigerator comprises: a refrigerating device in any one of the first to tenth aspects.

In a twelfth aspect of the present invention, the refrigerator of the eleventh aspect further comprises: a refrigerating chamber; and a freezing chamber operated at a temperature lower than that of the refrigerating chamber, the refrigerating chamber is cooled by the first heat absorbing means, and the freezing chamber is cooled by the second heat absorbing means.

### BRIEF DESCRIPTION OF THE DRAWINGS

FIG. 1 is a refrigerant circuit diagram showing a refrigerating device in one embodiment of the present invention;
FIG. 2 is an enthalpy and pressure graph of a refrigeration cycle of the refrigerating device in the embodiment of the present invention;
FIG. 3 is an enthalpy and pressure graph of a supercritical refrigeration cycle of the refrigerating device in the embodiment of the present invention;
FIG. 4 is a timing chart showing a first control method in the refrigerating device of the embodiment of the present invention;
FIG. 5 is a timing chart showing a second control method in the refrigerating device of the embodiment of the present invention;
FIG. 6 is a schematic constitution diagram showing an example in which the refrigerating device of the embodiment of the present invention is applied to a refrigerator;
FIG. 7 is a refrigerant circuit diagram showing a refrigerating device in another embodiment of the present invention; and
FIG. 8 is a refrigerant circuit diagram showing a refrigerating device in still another embodiment of the present invention.

### DESCRIPTION OF THE PREFERRED EMBODIMENT

Embodiments of the present invention will be described hereinafter in detail with reference to the drawings.

### [Embodiment 1]

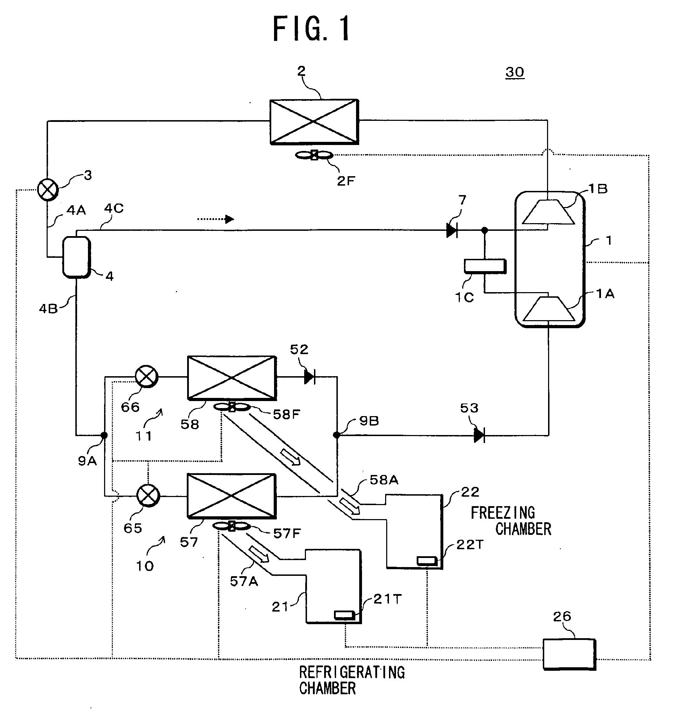

One embodiment of the present invention will be described in detail with reference to the drawings. FIG. 1 shows a refrigerant circuit diagram of a refrigerating device in one embodiment of the present invention. A refrigerating device 30 includes: a compressor 1; a radiator 2 connected to a discharge side of the compressor 1; a fan 2F which is disposed close to this radiator 2 and which cools a refrigerant in the radiator 2; an expansion valve 3 as pressure reducing means connected to an outlet side of the radiator 2; a gas-liquid separator 4 connected to a refrigerant pipe 4A on an outlet side of this expansion valve 3; a refrigerant pipe 4B in which a liquid refrigerant separated from this gas-liquid separator 4 circulates; first heat absorbing means 10 connected to one side from a branch point 9A from which this refrigerant pipe 4B is branched; and second heat absorbing means 11 connected to the other side from the branch point, disposed in parallel with the first heat absorbing means 10, and functioning in a temperature zone different from that of the first heat absorbing means 10. A refrigerant pipe 4C in which a gas refrigerant separated from the gas-liquid separator 4 flows is connected to an intermediate pressure section of the compressor 1, refrigerant pipes from the heat absorbing means 10, 11 are combined with each other in a confluent point 9B, and the subsequent refrigerant pipe is connected to a suction port of the compressor 1, thereby forming a refrigeration cycle .

Furthermore, the refrigerating device 30 includes: a stop valve 7 disposed between the gas-liquid separator 4 and the intermediate pressure section of the compressor 1; a stop valve 53 disposed between the confluent point 9B and the suction port of the compressor 1; and a control device 26.

The first heat absorbing means 10 includes: an expansion valve 65 as pressure reducing means; and a heat sink 57 connected in series to this expansion valve 65. The second heat absorbing means 11 includes an expansion valve 66 as pressure reducing means; and a heat sink 58 connected in series to this expansion valve 66. A stop valve 52 is disposed between the heat sink 58 and the confluent point 9B.

Here, the expansion valves 3, 65, and 66 are constituted so that a squeezing degree is variable. In the expansion valves 65 and 66, the squeezing degree of each valve is changed to lower a pressure of the refrigerant down to a predetermined pressure before the refrigerant reaches the heat sinks 57, 58, so that an evaporation temperature of the refrigerant can be controlled in the heat sinks 57, 58. The expansion valves 65, 66 have a function of refrigerant channel switching means. When one of the expansion valves 65 and 66 is fully closed, the means of switched to the first heat absorbing means 10 or the second heat absorbing means 11, and the refrigerant can be selectively circulated to one of the means. When the squeezing degree of the expansion valve 3 is changed, the pressure of the refrigerant is lowered to the predetermined pressure before the refrigerant reaches the gas-liquid separator 4, and a gas refrigerant is generated. When the refrigerant is fed into the gas-liquid separator 4 in this state, a separation efficiency in the gas-liquid separator 4 can be changed.

The compressor 1 is a two-stage compressor, a sealed container contains a first-stage compressing section 1A and a second-stage compressing section 1B, and an intermediate cooler 1C is disposed in the refrigerant pipe extending out of the sealed container in which the first-stage compressing section 1A is connected to the second-stage compressing section 1B. The refrigerant pipe 4C is connected to the compressor so that the gas refrigerant separated from the gas-liquid separator 4 can be introduced into the intermediate pressure section of the compressor 1, that is, between the intermediate cooler 1C and the second-stage compressing section 1B as described above. It is to be noted that the gas refrigerant is introduced into the intermediate pressure section of the compressor 1 as shown by a broken-line arrow owing to a difference pressure in the refrigerant pipe 4C. The compressor 1 is not limited to the two-stage compressor. When the compressor is, for example, a one-stage compressor, the refrigerant pipe 4C may be returned to an intermediate pressure section of the one-stage compressor. Alternatively, a plurality of compressors may be connected.

Furthermore, in the refrigerating device 30 of the present embodiment, fans 57F, 58F are disposed close to the heat sinks 57, 58, respectively. Moreover, cold air generated by the heat sink 57 is sent to a refrigerating chamber 21 via a duct 57A by the fan 57F, cold air generated by the heat sink 58 is sent to a freezing chamber 22 via a duct 58A by the fan 58F, and the chambers 21, 22 are cooled at a predetermined temperature, respectively. The chambers 21, 22 are provided with temperature sensors 21T, 22T.

The control device 26 is control means for controlling an operation frequency or an on/off state of the compressor 1, open degrees of the expansion valves 3, 65, and 66, on/off states of the fans 2F, 57F, and 58F and the like based on information of the temperature sensors 21T, 22T and the like. The device is constituted of, for example, a general-purpose microcomputer.

Moreover, in the refrigerating device 30 of the present embodiment, a carbon dioxide refrigerant (CO₂) which is a natural refrigerant is introduced as a refrigerant having a small load on environment in consideration of combustibility, toxicity and the like. As an oil as a lubricant of the compressor 1, there is used, for example, mineral oil, alkyl benzene oil, ether oil, polyalkylene glycol (PAG), polyol ester (POE) or the like.

There will be described an operation of the refrigerating device 30 constituted as described above in the present embodiment with reference to FIGS. 1, 2, and 3.

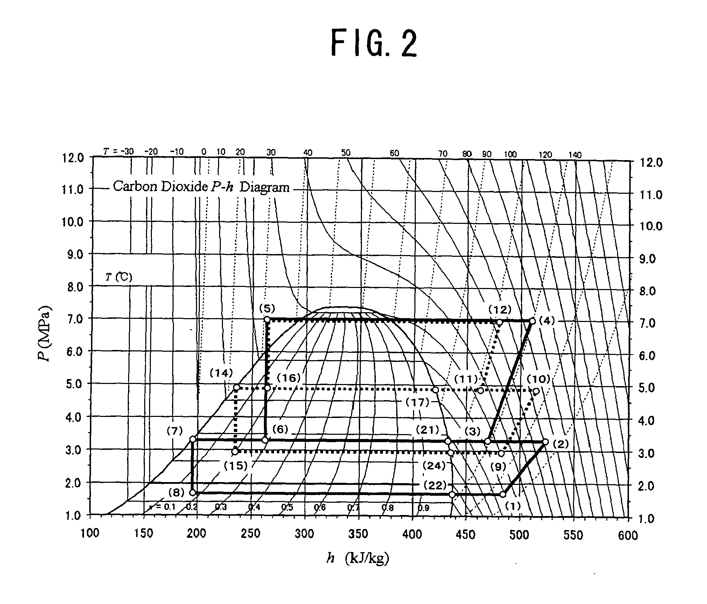

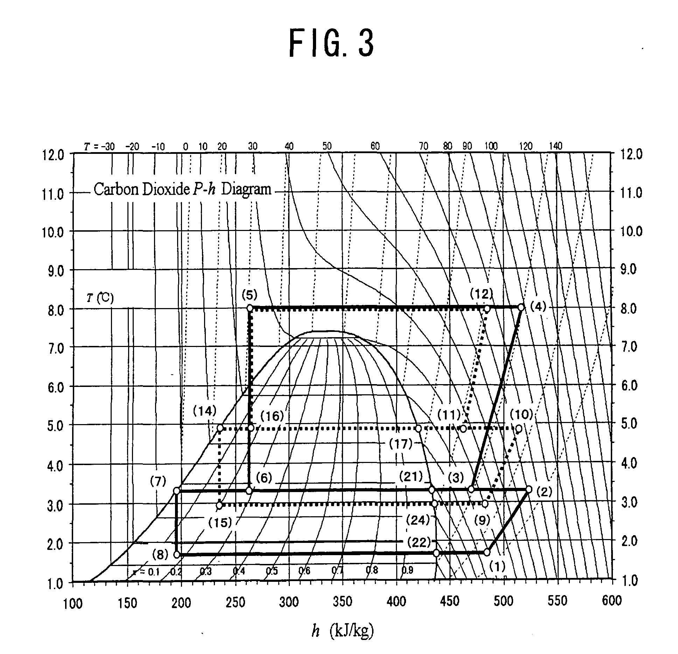

FIG. 2 is an enthalpy and pressure (ph) graph of the refrigeration cycle in the embodiment, and FIG. 3 is an enthalpy and pressure (ph) graph in a case where there is a supercritical pressure in a high-pressure-side circuit in the refrigeration cycle .

First, a freezing operation (e.g., around -26°C) will be described using a cycle shown by a solid line in FIG. 2. It is to be noted that this freezing operation refers to a case where the expansion valve 65 is closed by the control device 26 to circulate the refrigerant on a second heat absorbing means 11 side.

When the compressor 1 is operated in the present embodiment, the refrigerant discharged from the compressor 1 radiates heat, and is cooled in the radiator 2. That is, first the refrigerant is circulated in order of:(1) suction into the first-stage compressing section 1A; and (2) discharge from the first-stage compressing section 1A, and cooled in the intermediate cooler 1C. Thereafter, the refrigerant is circulated in order of: (3) suction into the second-stage compressing section 1B; and (4) discharge from the second-stage compressing section 1B to an inlet of the radiator 2. Moreover, the refrigerant reaches (5) an outlet of the radiator 2 and an inlet of the expansion valve 3, and (6) outlet of the expansion valve 3, and in this state, the refrigerant constitutes a two-phase mixture of a gas and a liquid.

Here, a ratio between the gas and the liquid corresponds to a ratio between a length (gas) of a line segment of (6) to (7) and a length (liquid) of a line segment from (6) to (21). This refrigerant enters the gas-liquid separator 4 in the form of the two-phase mixture. Moreover, the gas refrigerant separated here is introduced into the intermediate pressure section of the compressor 1, that is, between the intermediate cooler 1C and the second-stage compressing section 1B by the refrigerant pipe 4C.
In this case, (21) denotes an outlet of the gas-liquid separator 4. The gas refrigerant discharged from the separator reaches (3) the suction of the second-stage compressing section 1B, and is compressed by the second-stage compressing section 1B. On the other hand, the liquid refrigerant separated by the gas-liquid separator 4 reaches the expansion valve 66 via the confluent point 9A. In this case, (7) denotes the outlet of the gas-liquid separator 4 and the inlet of the expansion valve 66, (8) denotes an outlet of the expansion valve 66 and an inlet of the heat sink 58, and (22) denotes an outlet of the heat sink 58. After entering the heat sink 58, the liquid refrigerant evaporates, absorbs heat from its periphery, and returns to (1) the suction into the first-stage compressing section 1A.

On the other hand, during the refrigerating operation (e.g., around -5°C), a cycle is formed as shown by broken lines in FIGS. 2 and 3. It is to be noted that the refrigerating operation is a case where the expansion valve 66 is closed by the control device 26 to circulate the refrigerant on a first heat absorbing means 10 side.

Also in this case, when the compressor 1 is operated, the refrigerant discharged from the compressor 1 radiates heat, and is cooled in the radiator 2. That is, the refrigerant is circulated in order of: (9) suction into the first-stage compressing section 1A; and (10) discharge from the first-stage compressing section 1A, and cooled in the intermediate cooler 1C. Thereafter, the refrigerant is circulated in order of: (11) suction into the second-stage compressing section 1B; and (12) discharge from the second-stage compressing section 1B to the inlet of the radiator 2. Moreover, the refrigerant reaches (5) the outlet of the radiator 2 and the inlet of the expansion valve 3, and (16) the outlet of the expansion valve 3, and in this state, the refrigerant constitutes a two-phase mixture of a gas and a liquid.

Here, a ratio between the gas and the liquid corresponds to a ratio between a length (gas) of a line segment of (16) to (14) and a length (liquid) of a line segment from (16) to (17). This refrigerant enters the gas-liquid separator 4 in the form of the two-phase mixture. Moreover, the gas refrigerant separated here is introduced into the intermediate pressure section of the compressor 1, that is, between the intermediate cooler 1C and the second-stage compressing section 1B by the refrigerant pipe 4C. In this case, (17) denotes an outlet of the gas-liquid separator 4. The gas refrigerant discharged from the separator reaches (11) the suction of the second-stage compressing section 1B, and is compressed by the second-stage compressing section 1B. On the other hand, the liquid refrigerant separated by the gas-liquid separator 4 reaches the expansion valve 66 via the confluent point 9A. In this case, (14) denotes the outlet of the gas-liquid separator 4 and the inlet of the expansion valve 65, (15) denotes an outlet of the expansion valve 65 and an inlet of the heat sink 57, and (24) denotes an outlet of the heat sink 57. After entering the heat sink 57, the liquid refrigerant evaporates, absorbs heat from its periphery, and returns to (9) the suction into the first-stage compressing section 1A.

During both the freezing operation and the refrigerating operation, the refrigerant circulates to change its state as described above, and the refrigeration cycle is formed. The control device 26 operates the fan 58F during the freezing operation, and operates the fan 57F during the refrigerating operation to thereby cool the chambers 22, 21, respectively.

It is to be noted that since carbon dioxide is used as the refrigerant in the present embodiment, the high-pressure-side circuit is operated under a supercritical pressure as shown in the enthalpy and pressure (ph) graph of FIG. 3 on the conditions that, for example, an outside air temperature is about 30°C or more in summer, or a cooling load increases. Even in this case, it is possible to perform the freezing operation and the refrigerating operation in the same manner as in the refrigeration cycle shown in FIG. 2 as described above.

Moreover, in the freezing and refrigerating operations, even if the gas refrigerant separated by the gas-liquid separator 4 is circulated in the heat absorbing means 10, 11, respectively, the refrigerant cannot be used in cooling. When the refrigerant is returned to the suction of the first-stage compressing section 1A, a refrigeration cycle efficiency is lowered.

To solve the problem, in the present embodiment, since the gas refrigerant separated by the gas-liquid separator 4 is introduced into the intermediate pressure section of the compressor 1, that is, between the intermediate cooler 1C and the second-stage compressing section 1B, the refrigeration cycle efficiency can be improved. Especially in the present embodiment, since carbon dioxide is used as the refrigerant, a gas content increases in the ratio of the gas and the liquid separated by the gas-liquid separator 4 as compared with a Freon-based refrigerant, a hydrocarbon-based refrigerant or the like. When a large gas content is introduced into the intermediate pressure section of the compressor 1, the refrigeration cycle efficiency can further be improved.

Furthermore, in the present embodiment, the heat sinks 57, 58 are selectively used based on a use temperature zone as described above. In consequence, in the freezing operation and the refrigerating operation having different temperature zones, the heat sink suitable for the temperature is usable, and there can be expected improvement of an operation efficiency of each operation.

It is to be noted that the refrigerating device 30 of the present embodiment includes the heat sinks 57, 58 which function in different temperature zones as described above. However, the refrigerant sometimes pools in the heat sink 58 during, for example, the freezing operation performed at a temperature lower than that of the refrigerating operation. In a low-pressure-side circuit of the present embodiment, that is, from the expansion valves 65 and 66 to the suction port of the first-stage compressing section 1A via the confluent point 9B, as shown also in FIGS. 2 and 3, the pressure in the low-pressure-side circuit becomes higher during the refrigerating operation rather than during the freezing operation. On the outlet side of the heat sink 58, there is disposed the stop valve 52 for preventing a high-temperature refrigerant from being discharged into the heat sink 58 during the refrigerating operation.

Therefore, the refrigerant stored in the heat sink 58 during the freezing operation as described above does not circulate in the refrigeration cycle during the subsequent refrigerating operation, and an amount of the refrigerant in the refrigeration cycle is unstable during the refrigerating operation.

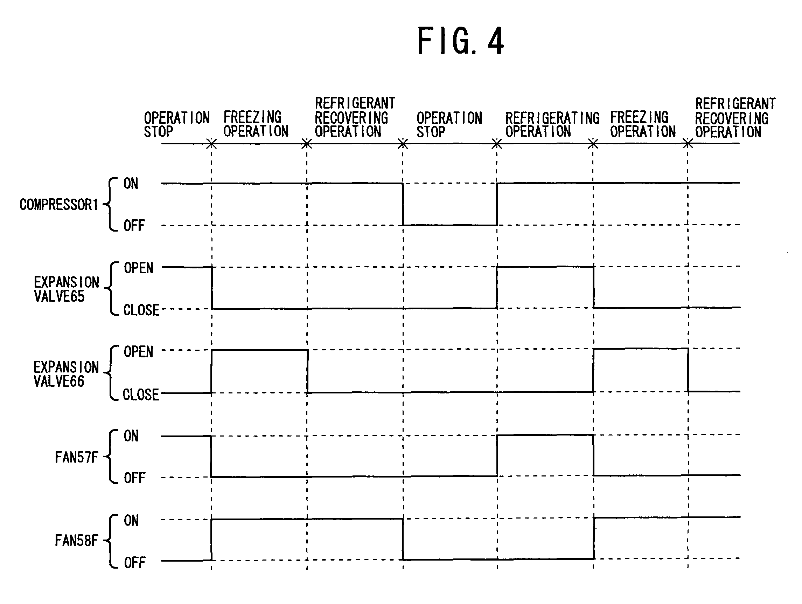

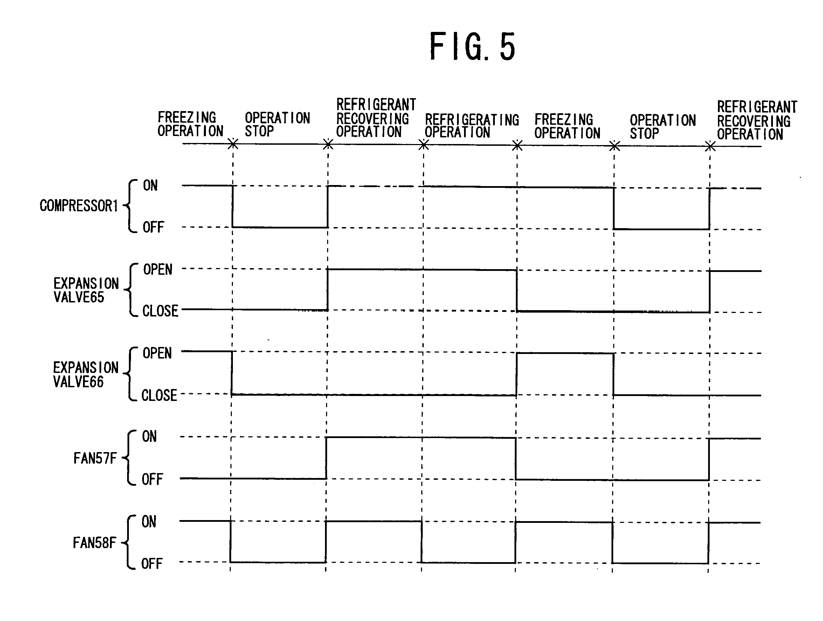

Next, there will be described a refrigerant recovering operation in the refrigerating device 30 of the present embodiment with reference to FIGS. 4 and 5. FIG. 4 is a timing chart showing a first control method in the refrigerating device 30, and FIG. 5 is a timing chart showing a second control method in the refrigerating device 30.

### First Control Method

There will be described a first control method in the present embodiment with reference to FIG. 4. In this first control method, a refrigerant recovering operation is executed at a time when the freezing operation is stopped. It is to be noted that in the present embodiment, there will be first described a case where the freezing operation is performed, but the freezing operation does not have to be performed first in the present invention.

First, the freezing operation is performed. In the present freezing operation, the control device 26 closes the expansion valve 65, and opens the expansion valve 66. The device turns off the fan 57F, and turns on the fan 58F. Accordingly, the freezing operation is performed as described above.

Next, the refrigerant recovering operation is performed. This refrigerant recovering operation is an operation to recover the refrigerant stored in the heat sink 58 during the freezing operation. That is, in the freezing operation, when a temperature detected by the temperature sensor 22T in the freezing chamber 22 reaches a predetermined temperature (e.g., -26°C), the control device 26 executes the refrigerant recovering operation.

In the present refrigerant recovering operation, the control device 26 closes the expansion valve 66 in addition to the expansion valve 65. The compressor 1 and the fan 58F are turned on. Accordingly, evaporation of the refrigerant stored in the heat sink 58 is promoted by the fan 58F, and the stored refrigerant is sucked and recovered by the compressor 1. Moreover, the recovered refrigerant is discharged by the compressor 1. The refrigerant discharged by the compressor 1 in this manner flows through the radiator 2. After the pressure of the refrigerant is reduced by the expansion valve 3, the refrigerant is sent to the gas-liquid separator 4, and separated into the gas and the liquid. Moreover, since the expansion valves 65 and 66 are closed, the separated liquid refrigerant pools in this gas-liquid separator 4. In the first control method of the present embodiment, the refrigerant recovering operation is performed as described above.

As described above, in the refrigerating device 30 of the present embodiment, the refrigerant recovered from the heat sink 58 is stored in the gas-liquid separator 4. Therefore, the fan 2F does not have to be especially turned on during the refrigerant recovering operation, and it is possible to suppress power consumption and operation noise of the refrigerating device 30.

Furthermore, since carbon dioxide is used as the refrigerant in the refrigerating device 30 of the present embodiment, the high-pressure-side circuit of the refrigeration cycle including the radiator 2 is sometimes operated with the supercritical pressure. In this case, since the radiator 2 has a supercritical state therein, the recovered refrigerant cannot condense in the radiator 2 as in the conventional example.

However, in the refrigerating device 30 of the present embodiment, the refrigerant recovered from the heat sink 58 is stored in the gas-liquid separator 4 as described above. Therefore, even in a case where the supercritical pressure is brought in the high-pressure-side circuit, the refrigerant recovering operation can be performed.

It is to be noted that in a case where the high-pressure-side circuit does not have the supercritical pressure, the control device 26 turns on the fan 2F disposed close to the radiator 2. Accordingly, the refrigerant recovered and thereafter discharged by the compressor 1 is allowed to condense in the radiator 2. This is applicable depending on use mode or installation place.

Furthermore, in the present embodiment, even in a case where the high-pressure-side circuit has a supercritical pressure, the fan 2F is turned on to thereby further cool the refrigerant, and a refrigerant recovering speed can be increased. In this case, power consumption or the like increases. However, this is applicable depending on the use mode or the installation place.

Moreover, in a case where it is judged by a value detected by an outside air sensor (not shown) or the like that the high-pressure-side circuit of the refrigerating device 30 is operated with the supercritical pressure, the control device 26 executes a control so as to store the refrigerant recovered by the refrigerant recovering operation in the gas-liquid separator 4. On the other hand, in a case where it is judged that the high-pressure-side circuit is not operated with the supercritical pressure, the control device 26 may store the refrigerant recovered by the refrigerant recovering operation in the gas-liquid separator 4 and/or the radiator 2.

After such refrigerant recovering operation, the control device 26 closes the expansion valves 65 and 66, and turns off the compressor 1 and the fans 57F, 58F. Accordingly, the operation in the refrigerating device 30 is stopped. Thereafter, in the refrigerating device 30 of the present embodiment, the control device 26 opens the expansion valve 65, closes the expansion valve 66, turns on the fan 57F, and turns off the fan 58F. Accordingly, the freezing operation is performed as described above. Thereafter, the freezing operation is executed again. In the first control method of the present embodiment, the operations are successively executed as described above.

### Second Control Method

Next, there will be described a second control method in the present embodiment with reference to FIG. 5. In this second control method, a refrigerant recovering operation is executed immediately before a refrigerating operation starts.

First, in an operation stop state in which the expansion valves 65 and 66 are closed, and the compressor 1 and the fans 57F, 58F are turned off, the refrigerant recovering operation is performed to recover the refrigerant stored in the heat sink 58 by the freezing operation before performing the refrigerating operation.

In this case, the control device 26 opens the expansion valve 65, closes the expansion valve 66, and turns on the fans 57F, 58F. Moreover, the control device 26 operates the compressor 1 at a frequency higher than that during usual operation. It is to be noted that a part shown by a one-dot chain line in the timing chart of the compressor 1 in FIG. 5 is a timing at which the compressor 1 is operated at the high frequency.

Consequently, during the refrigerant recovering operation in the present second control method, the pressure in the heat sink 57 becomes lower than that in the heat sink 58. Furthermore, the fan 58F is turned on to promote the evaporation of the refrigerant stored in the heat sink 58, so that the compressor 1 sucks and recovers the stored refrigerant. The recovered refrigerant pools in the gas-liquid separator 4 or the like as described above in the first control method. In the second control method of the present embodiment, the refrigerant recovering operation is performed as described above, and thereafter the refrigerating operation and the freezing operation are successively executed.

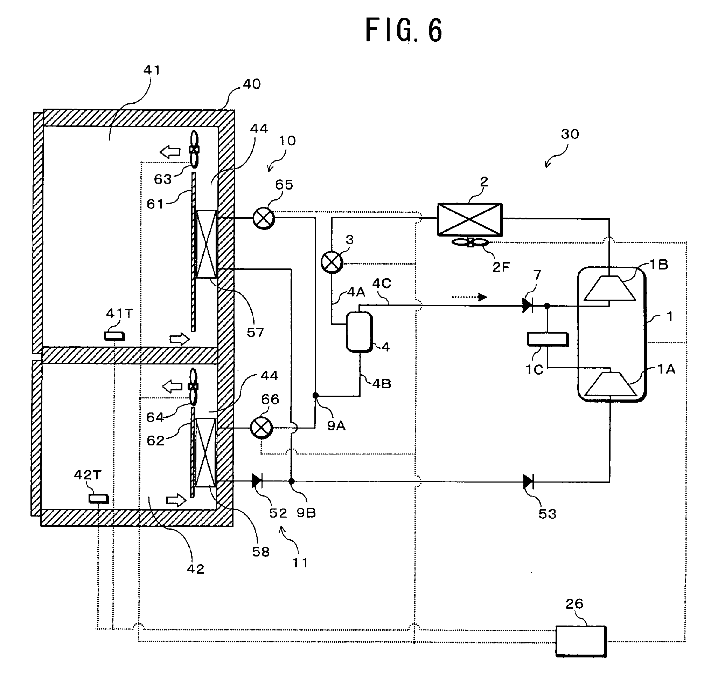

Next, there will be described an example in which the refrigerating device 30 of the present embodiment is applied to a refrigerator with reference to FIG. 6.

FIG. 6 shows a schematic constitution diagram of the refrigerator including the refrigerating device 30 of the present embodiment. This refrigerator 40 includes an upper-stage refrigerating chamber 41, and a lower-stage freezing chamber 42. Moreover, in-chamber partition walls 61, 62 are disposed in inner parts of the chambers 41, 42, respectively. The above-described heat sinks 57, 58, and fans 63, 64 are disposed in an air path 44 defined by the in-chamber partition walls 61, 62. A temperature sensor 42T is disposed in the freezing chamber 42, and a temperature sensor 41T is disposed in the refrigerating chamber 41.

In the present constitution, when a thermostat turns on or off during the refrigerating operation and the freezing operation, the first heat absorbing means 10 and the second heat absorbing means 11 are switched as described above. The refrigerant is passed through one of the heat sinks 57, 58, and the corresponding fans 63, 64 are driven. In a case where the refrigerant flows in the heat sink 57, cold air is supplied to the refrigerating chamber 41. In a case where the refrigerant flows into the heat sink 58, cold air is supplied to the freezing chamber 42.

As described above, since the refrigerator 40 of the present embodiment includes the refrigerating device 30 constituted as described above, it is possible to obtain a high cooling performance and a high efficiency operation even in a case where carbon dioxide is used in the refrigerant. Furthermore, in the refrigerator 40, if the above-described first or second control method is performed by the fans 63, 64 instead of the fans 57F, 58F, the refrigerant recovering operation can be executed.

It is to be noted that in the refrigerating device 30 of the present embodiment, during the freezing operation, the expansion valve 65 is closed, and the expansion valve 66 is opened to circulate the refrigerant in the second heat absorbing means 11. During the refrigerating operation, the expansion valve 66 is closed, and the expansion valve 65 is opened to circulate the refrigerant in the first heat absorbing means 10. The present invention is not limited to this embodiment. In, for example, the refrigerator 40, in a case where the refrigerating chamber 41 and the freezing chamber 42 at room temperature need to be rapidly cooled during so-called pull-down, in a case where the compressor 1 is started to operate from the operation stop state, or highly loaded, or in a case where the temperature of the refrigerating chamber 41 or the freezing chamber 42 is not less than a predetermined temperature, both the expansion valves 65 and 66 are opened at a required open degree. Accordingly, the refrigerant is circulated on opposite sides of the first heat absorbing means 10 and the second heat absorbing means 11, and the chambers 41, 42 can be rapidly cooled, respectively.

### [Embodiment 2]

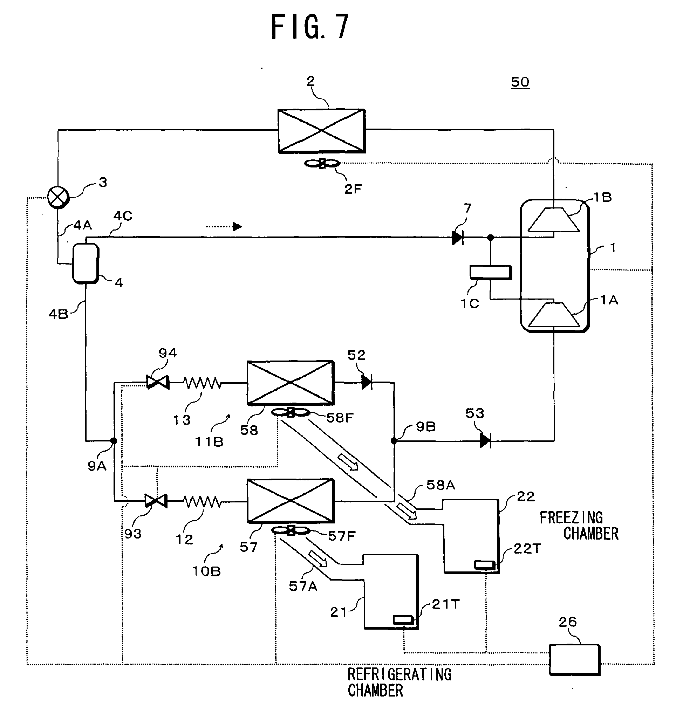

Next, another embodiment of the present invention will be described with reference to FIG. 7. FIG. 7 shows a refrigerant circuit diagram of a refrigerating device 50 in this case. In the present embodiment, components denoted with the same reference numerals of Embodiment 1 have identical or similar functions or effects. The present embodiment is different from Embodiment 1 in that third heat absorbing means 10B is disposed instead of the first heat absorbing means 10, and fourth heat absorbing means 11B is disposed instead of the second heat absorbing means 11.

The third heat absorbing means 10B includes a refrigerant circulation control valve 93, a capillary tube 12, and a heat sink 57. The fourth heat absorbing means 11B includes a refrigerant circulation control valve 94, a capillary tube 13 having a resistance value larger than that of the capillary tube 12, and a heat sink 58. That is, the third and fourth heat absorbing means 10B, 11B include the refrigerant circulation control valves 94, 95 and the capillary tubes 12, 13 instead of the expansion valves 65 and 66 in the first and second heat absorbing means 10, 11.

In the refrigerating device 50 of the present embodiment, the refrigerant circulation control valves 94, 95 have a function of refrigerant channel switching means. A control device 26 closes one of the valves to thereby perform the freezing operation in a case where the refrigerant is passed on a capillary tube 13 side, and perform the refrigerating operation in a case where the refrigerant is passed on a capillary tube 12 side.

Moreover, even in the present embodiment, operations can be executed by first and second control methods in the same manner as in Example 1. In this case, instead of an opening/closing operation of the expansion valves 65 and 66, the refrigerant circulation control valves 94, 95 are opened and closed.

As described above, since the refrigerating device 50 of the present embodiment does not include the expansion valves 65 and 66, the present invention can be realized at low cost. Needless to say, the refrigerating device 50 of the present embodiment is applicable to a refrigerator in the same manner as in the refrigerating device 30 of Embodiment 1.

### [Embodiment 3]

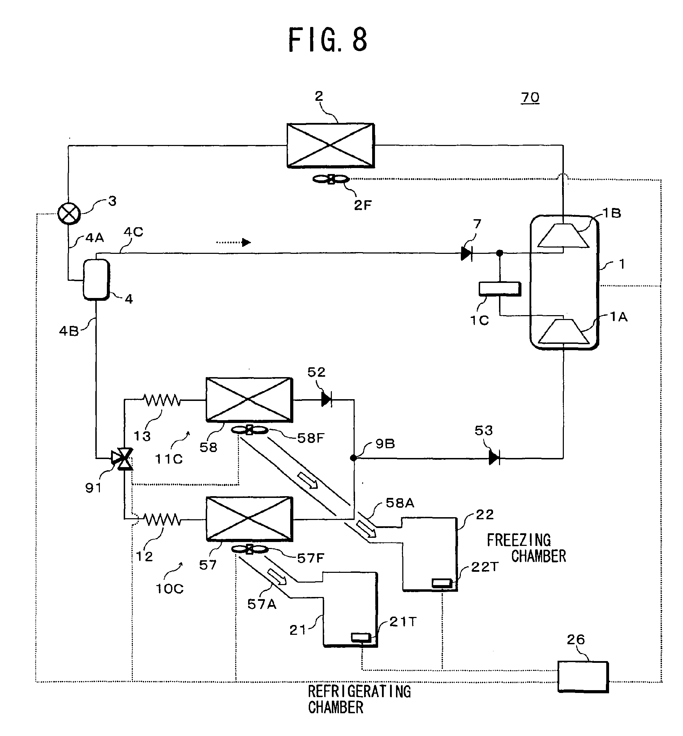

Next, another embodiment of the present invention will be described with reference to FIG. 8. FIG. 8 shows a refrigerant circuit diagram of a refrigerating device 70 in this case. In the present embodiment, components denoted with the same reference numerals of the above embodiments have identical or similar functions or effects. The present embodiment is different from Embodiment 1 in that the refrigerating device includes a three-way valve 91 as refrigerant channel switching means, fifth heat absorbing means 10C instead of the first heat absorbing means 10, and sixth heat absorbing means 11C instead of the second heat absorbing means 11.

The fifth heat absorbing means 10C includes a capillary tube 12 and a heat sink 57. The sixth heat absorbing means 11C includes a capillary tube 13 having a resistance value larger than that of the capillary tube 12, and a heat sink 58. That is, the fifth and sixth heat absorbing means 10C, 11C include the capillary tubes 12, 13 instead of the expansion valves 65 and 66 in the first and second heat absorbing means 10, 11, and the means include the three-way valve 91 as the refrigerant channel switching means. It is to be noted that the three-way valve 91 is also switchable into a state in which any refrigerant is not passed on a capillary tube 12 or 13 side.

In the refrigerating device 70 of the present embodiment, the control device 26 controls the switching of the three-way valve 91 to circulate the refrigerant in one of the fifth and sixth heat absorbing means 10C, 11C. Accordingly, a freezing operation and a refrigerating operation are switched.

Moreover, even in the present embodiment, the operations can be executed by first and second control methods in the same manner as in Example 1. In this case, instead of an opening/closing operation of the expansion valves 65 and 66, the circulation of the refrigerant into the heat absorbing means 10C, 11C may be selected by the three-way valve 91..

As described above, since the refrigerating device 70 of the present embodiment does not include the expansion valves 65 and 66, the present invention can be realized at low cost. Needless to say, the refrigerating device 70 of the present embodiment is applicable to a refrigerator in the same manner as in the refrigerating devices 30, 50 of the above embodiments.

The present invention has been described above in detail in accordance with the embodiments, but the present invention is not limited to them, and can be variously modified. For example, in the above embodiments, the carbon dioxide refrigerant is introduced in the refrigerant circuit, but the present invention is not limited to the embodiments, and the present invention is also applicable to a case where another refrigerant such as a Freon-based or hydrocarbon-based refrigerant is introduced. The expansion valve 3 may be replaced with a capillary tube if necessary.

## Claims

1. A refrigerating device provided with a refrigeration cycle including: a compressor; a radiator connected to a discharge side of the compressor; first pressure reducing means connected to an outlet side of the radiator; a gas-liquid separator connected to an outlet side of the first pressure reducing means; first heat absorbing means through which a liquid refrigerant from the gas-liquid separator flows and which includes second pressure reducing means and a first heat sink; and second heat absorbing means disposed in parallel with the first heat absorbing means and including third pressure reducing means and a second heat sink,
refrigerant pipes of the first and second heat absorbing means on the outlet side being combined and connected to a suction side of the compressor,
the second heat absorbing means functioning in a temperature zone lower than that of the first heat absorbing means,
a first cooling operation to operate the first heat absorbing means and a second cooling operation to operate the second heat absorbing means being switchable to each other,
the refrigerating device comprising:
control means for performing a refrigerant recovering operation to stop circulation of the refrigerant into the second heat absorbing means, operate the compressor, recover the refrigerant stored in the second heat sink, and store the refrigerant in the gas-liquid separator in a state in which circulation of the refrigerant into the first heat absorbing means is stopped after the second cooling operation is completed.

2. The refrigerating device according to claim 1, further comprising:
blowing means for sending air to the second heat sink,
the blowing means being operated during the refrigerant recovering operation.

3. The refrigerating device according to claim 1 or 2, wherein the compressor has an intermediate pressure section,
the refrigerating device further comprising:
a refrigerant pipe capable of introducing a gas refrigerant separated by the gas-liquid separator into the intermediate pressure section.

4. The refrigerating device according to any one of claims 1 to 3, wherein a high-pressure side of the refrigeration cycle is operated with a supercritical pressure.

5. The refrigerating device according to any one of claims 1 to 4, wherein the refrigerant recovered from the second heat sink is stored in the gas-liquid separator in a case where the high-pressure side of the refrigeration cycle is operated with the supercritical pressure, and
the refrigerant recovered from the second heat sink is stored in the gas-liquid separator and/or the radiator in a case where the high-pressure side of the refrigeration cycle is not operated with the supercritical pressure.

6. The refrigerating device according to claim 5, wherein the blowing means for sending air to the radiator is disposed close to the radiator, and
the blowing means is operated at a time when the refrigerant recovered from the second heat sink is stored in the radiator.

7. A refrigerating device provided with a refrigeration cycle including: a compressor; a radiator connected to a discharge side of the compressor; first pressure reducing means connected to an outlet side of the radiator; a gas-liquid separator connected to an outlet side of the first pressure reducing means; first heat absorbing means through which a liquid refrigerant from the gas-liquid separator flows and which includes second pressure reducing means and a first heat sink; and second heat absorbing means disposed in parallel with the first heat absorbing means and including third pressure reducing means and a second heat sink,
refrigerant pipes of the first and second heat absorbing means on the outlet side being combined and connected to a suction side of the compressor,
wherein the second heat absorbing means functions in a temperature zone lower than that of the first heat absorbing means,
a first cooling operation to operate the first heat absorbing means and a second cooling operation to operate the second heat absorbing means are switchable to each other, the refrigerating device permitting circulation of the refrigerant into the first heat absorbing means, stopping circulation of the refrigerant into the second heat absorbing means, and operating the compressor at a frequency higher than that of the first or second cooling operation before starting the first cooling operation.

8. A refrigerating device provided with a refrigeration cycle including: a compressor; a radiator connected to a discharge side of the compressor; first pressure reducing means connected to an outlet side of the radiator; a gas-liquid separator connected to an outlet side of the first pressure reducing means; first heat absorbing means through which a liquid refrigerant from the gas-liquid separator flows and which includes second pressure reducing means and a first heat sink; and second heat absorbing means disposed in parallel with the first heat absorbing means and including third pressure reducing means and a second heat sink,
refrigerant pipes of the first and second heat absorbing means on the outlet side being combined and connected to a suction side of the compressor,
wherein the second heat absorbing means functions in a temperature zone lower than that of the first heat absorbing means,
a first cooling operation to operate the first heat absorbing means and a second cooling operation to operate the second heat absorbing means are switchable to each other,
the refrigerating device performing a refrigerant recovering operation of permitting circulation of the refrigerant into the first heat absorbing means, stopping circulation of the refrigerant into the second heat absorbing means, operating the compressor at a frequency higher than that of the first or second cooling operation, recovering the refrigerant stored in the second heat sink, and sending the refrigerant to the gas-liquid separator to store the refrigerant before starting the first cooling operation.

9. The refrigerating device according to claim 7 or 8, further comprising:
blowing means for sending air to the second heat sink,
the blowing means being operated in a case where the compressor is operated at the high frequency.

10. The refrigerating device according to any one of claims 1 to 9, wherein carbon dioxide is used as the refrigerant.

11. A refrigerator comprising:
a refrigerating device according to any one of claims 1 to 10.

12. The refrigerator according to claim 11, further comprising:
a refrigerating chamber; and
a freezing chamber operated at a temperature lower than that of the refrigerating chamber,
the refrigerating chamber being cooled by the first heat absorbing means, the freezing chamber being cooled by the second heat absorbing means.
